# EUROPEAN PATENT APPLICATION

(11) **EP 0 844 724 A1**
(43) Date of publication of application: **27.05.1998**
(21) Application number: 97309407.1
(22) Date of filing: 21.11.1997
(51) Int. Cl.: H02K 7/18, B61D 43/00

(54) **End of axle clamp-on electrical power device**

(30) Priority: 25.11.1996 US 31733 P
(71) Applicant: THE WHITAKER CORPORATION, Wilmington, Delaware 19808 (US)
(72) Inventor: Volinskie, Robert, Hershey, Pennsylvania 17033 (US)
(74) Representative: Warren, Keith Stanley

(57) **Abstract**

A retaining device for coupling an electrical assembly (90) to the end of an axle (13) of a vehicle includes a hub (70) having a bore (78) therethrough. A pair of upper and lower body members (61), removably attached to the hub, engage the outer diameter of the axle (13) for aligning the hub with the axle. A rod (79) is disposed within the bore (78) in the hub and is urged against the end (18) of the axle so that the upper and lower body members (61) are pulled tightly against a shoulder (18a) formed on the end of the axle (13) for securing the hub (70) to the axle. The electrical assembly (90) has a stator (93) that is coupled to and prevented from rotating by a projection (17) extending from the vehicle and a rotor (91) that is supported by and rotated by the hub (70).

## Description

The present invention relates to an electrical power device comprising an electrical inductance type generator for mounting to the end of an axle of a moving vehicle, e.g. a railroad car, and more particularly to retaining apparatus for coupling the electrical power device to the vehicle.

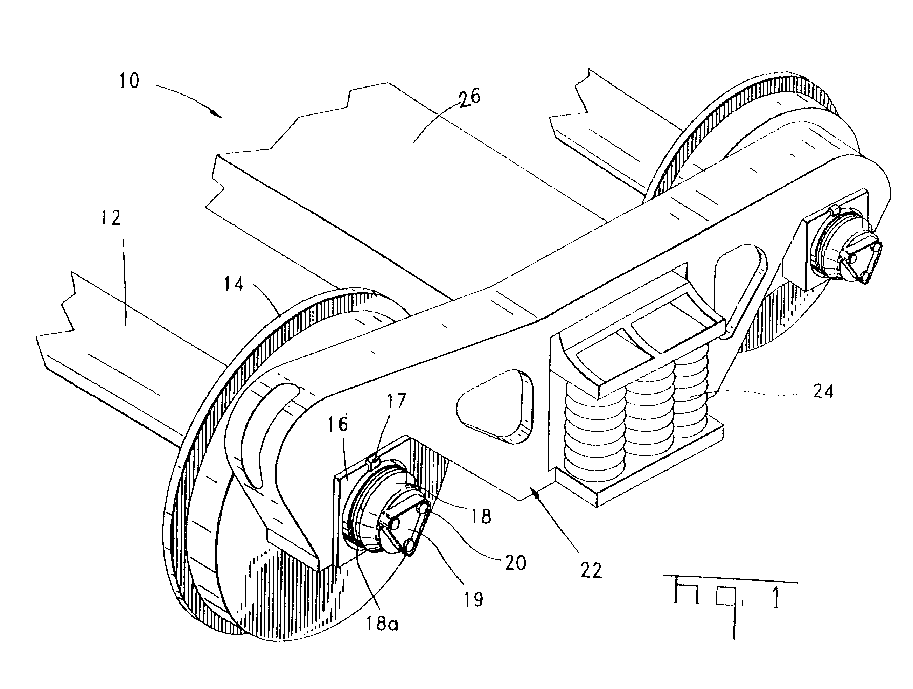

Figure 1 shows a railroad car undercarriage assembly 10 which includes a rotatable axle 12. A railway wheel 14 is rigidly connected to axle 12, and axle 12 is rotatably received in a bearing box 16. Bearing box 16 includes a handling hook 17 which is used in assembly of bearing box 16 to axle 12, and box 16 includes a standard bearing end cap 18 for retaining bearing assembly 30 in place on axle 12. End cap 18 includes an outer peripheral portion 18a, and a bolting face 19 which receives bolts 20 therethrough. Bearing end cap 18 is a standard end cap in the sense that bolt holes are provided therein only for the purpose of attaching the end cap 18 to the axle 12. Axle 12 receives bolts 20 therein for rigidly mounting end cap 18 to axle 12. Bearing box 16 supports a yoke 22 so that axle 12 rotates freely relative to yoke 22. Yoke 22 supports suspension springs 24 which, in turn, support a frame 26. Frame 26 comprises an integral part of a rail car, for example, a box car or flat car (not shown).

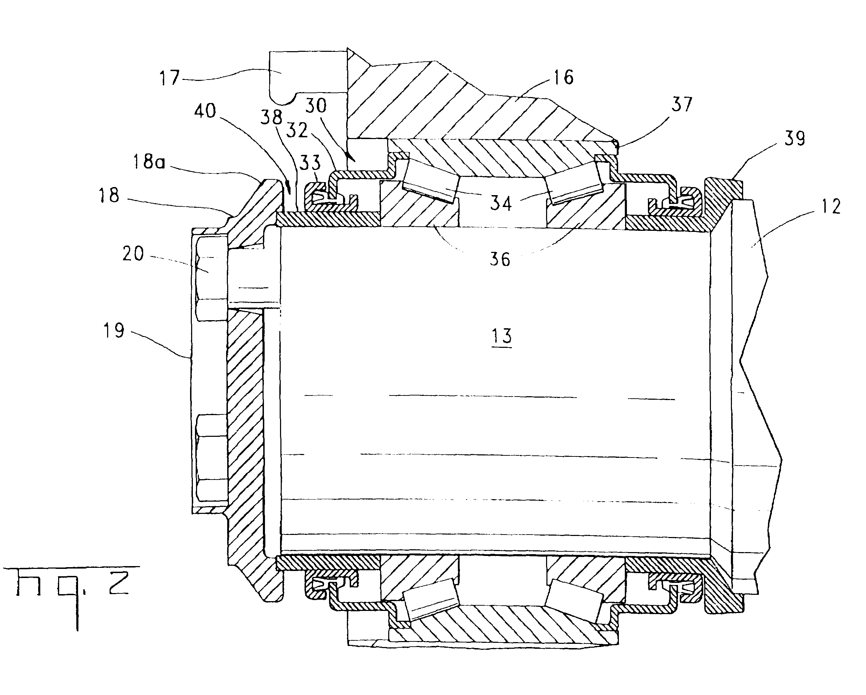

As is best shown in Figure 2, axle 12 includes a reduced diameter end section 13 to which a bearing assembly 30 is fixed. Bearing assembly 30 includes a bearing casing 32 wherein rollers 34 are arranged for rolling movement between axle collars 36 and a bearing box collar 37. Bearing assembly 30 also includes a seal casing 33 rigidly connected to axle end section 13 for preventing the influx of foreign matter into bearing casing 32. Axle collars 36 are rigidly connected to axle end section 13 for rotation therewith, and collars 36 are axially fixed between outboard and inboard axial locking members comprising rings 38,39, respectively. An interstice 40 exists between outer peripheral portion 18a of end cap 18, axial locking ring 38, and seal casing 33.

The present bearing assembly, however, is selected for illustrative purposes, and is not representative of all possible bearing assembly designs. For example, the axial locking ring may be formed integrally with the bearing end cap, as is disclosed in document EP-A-449538, which document is discussed more fully hereinbelow. In any event, the integrity of the bearing assembly must be preserved to prevent failure thereof and thereby avoid derailment of the rail car due to bearing failure.

An electrical power device used in combination with a rotating axle, such as axle 12, can be of several types. For example, electrical power devices of the inductance or reluctance motor types convert electrical energy to mechanical energy in the form of torque applied to rotate the axle. Conversely, electrical inductance or reluctance type generators use a rotating axle to generate electrical energy in the form of electrical current. In the railroad car context, electrical generators are used to provide power for anti-lock braking systems, anti-wheel slide control devices, for monitoring wheel speed, or to send data signals to "black box" recorders.

Typically, such a generator is mounted to the end of an axle of the rail car, such as axle 12, in the vicinity of the bearing box 16. Such a generator is disclosed in EP-A-449538, wherein the generator is described as including a rotor rigidly connected to a bearing end cap by bolts which are threaded into threaded holes in the axle. The bearing end cap is specialized in the sense that an additional set of bolts pass therethrough, which set is for a purpose other than merely attaching the end cap to the axle, that is, they are a set of generator attaching bolts.

Several disadvantages exist in the use of such a specialized end cap part. For example, the generator attaching bolts and mounting holes require a specialized bearing end cap part which is expensive to manufacture. Additionally, the need for railroad owners to keep such specialized parts on hand for repairs and maintenance undesirably increases parts inventory and capital expenses. Moreover, it is not desirable to retrofit the electrical power device described in EP-A-449538 to existing rail cars having standard type bearing end caps because a given standard end cap must be removed from the axle and the specialized end cap bolted to the axle in its stead, which is a time consuming procedure. This procedure is also problematic from a railroad safety standpoint because when the bearing end cap is removed, the roller bearing assembly may be disturbed, thereby potentially misaligning the bearing assembly. Such a misaligned bearing assembly may disintegrate under the normal operating conditions of the rail car, thereby causing a failure of the bearing which may ultimately result in catastrophic derailment of the rail car. Because of the importance of proper bearing alignment, removal and replacement of the bearing end cap must be performed by a specialized shop facility, requiring the transportation of the unit to that facility. Furthermore, if the specialized end cap is damaged, the entire installation process of removing and replacing the end cap must be repeated.

The present invention overcomes these disadvantages by providing a retaining device for coupling an electrical assembly to the end of an axle of a vehicle, wherein the end terminates in an outer peripheral portion forming a first shoulder extending outwardly from the outer diameter. The retaining device includes a hub having a bore therethrough with a first axis and attaching means coupled to the hub and arranged to engage the axle for aligning the first axis with the axis of the axle, and for engaging the first shoulder. A rod is disposed in the bore, and means is provided for urging the rod into engagement with the axle so that the attaching means tightly engages the first shoulder thereby securing the hub to the axle. The electrical assembly is supported by the hub.

The invention will now be described by way of example with reference to the accompanying drawings in which:

Figure 1 shows an isometric view of a conventional railroad car undercarriage assembly.

Figure 2 shows a cross sectional view of a portion of the axle and bearing box of the assembly shown in Figure 1.

Figure 3 shows an isometric view of a hub assembly for use with an electrical power device in accordance with the present invention.

Figure 4 shows an electrical power device assembly comprising an electrical power device mounted on the hub assembly shown in Figure 3.

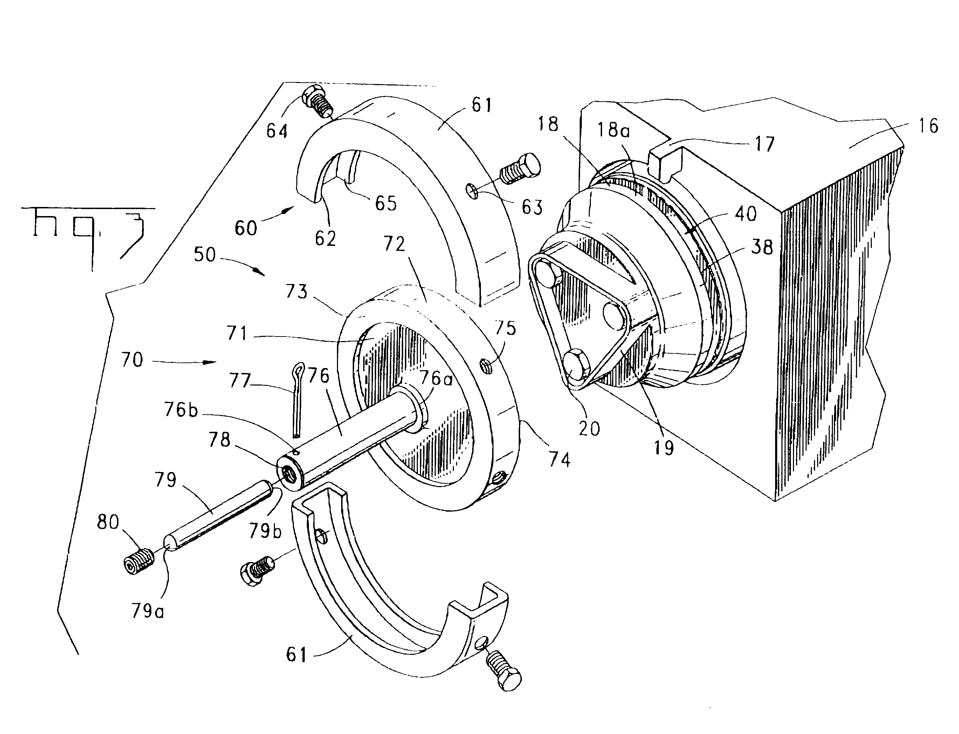

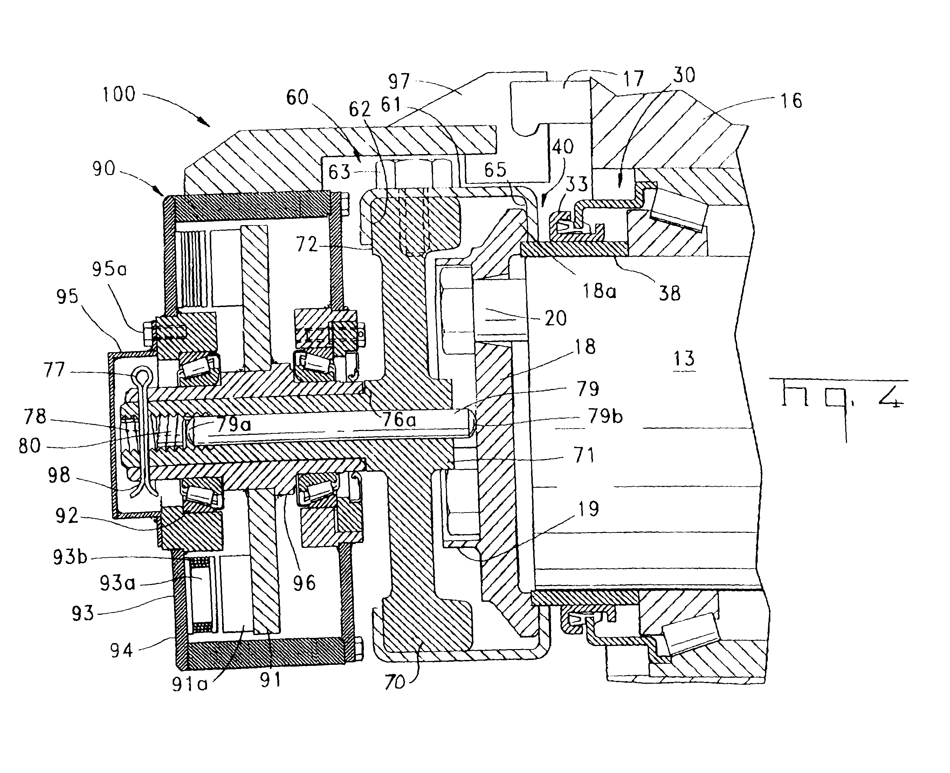

Relevant reference numbers used in Figures 1 and 2 have been used in Figures 3 and 4 as well to illustrate how the present invention is used in the context of a railroad car. Such reference numbers refer to the same features in Figures 3 and 4 as they did in Figures 1 and 2 and, therefore, will not be further described herein.

Figure 3 shows a hub assembly 50 for use with the railroad car undercarriage as described hereinabove with reference to Figures 1 and 2. Figure 4 shows an electrical power device assembly 100 including an electrical power device 90 mounted to axle 12 by the mounting assembly 50. In the present embodiment, the electrical power device 90 comprises an inductance type generator mounted to the mounting assembly 50, which, in turn, is mounted to bearing end cap 18 and axle end section 13. The rotation of axle 12 is used to generate electricity in the form of electrical current output from electrical power device 90, as will be further described below.

Mounting assembly 50 includes a retaining assembly 60 and hub assembly 70. The retaining assembly 60 includes upper and lower body members 61 each having an outboard wall 62 and an inboard wall 65, the outboard and inboard walls being mutually opposed. Each body member 61 further includes through holes 63 for receiving respective fasteners 64 herein. Hub assembly 70 includes a generally disc-shaped body 71 including a cylindrically shaped outer annular surface 72 with threaded holes 75 formed therein, and inboard and outboard radial surfaces 73, 74 adjacent thereto. Projecting away from the disc shaped body 71 and integral therewith is a hub shaft 76. Hub shaft 76 includes a radial stop 76a formed adjacent disc shaped body 71, and a transverse through hole 76b located at a distal end of hub shaft 76. Hub shaft 76 also includes a threaded bore 78 axially extending therein for receiving a spacer rod 79. Spacer rod 79 is sized to slidably fit into threaded bore 78, and rod 79 includes rounded ends 79a,79b. Set screw 80 is threaded into the threaded bore 78.

As best shown in Figure 4, electrical power device 90 includes a magnetically permeable rotor 91 having permanent magnets 91A attached thereto, and a roller bearing assembly 92. Rotor 91 is fixedly attached to a rotor shaft 96. Electrical power device 90 further comprises a magnetically permeable stator 93 having poles 93a with winding 93b wrapped therearound in the usual manner. Poles 93a are spaced out at an appropriate air gap distance away from permanent magnets 91a, in the usual manner, for allowing magnetic flux to flow through the air gap to windings 93b. Stator 93 comprises part of a housing 94 to which a cover plate 95 is attached by means of a bolt 95a. Additionally, housing 94 includes two integrally formed lugs 97 (only one shown in Figure 4) with a space therebetween for receiving hook 17.

With reference to the foregoing, assembly of the electrical power device assembly 100 will now be described. First, disc 71 of hub assembly is held against bolt well 18 and is generally centered over the center of axle 12. Upper and lower body members 61 of retaining assembly 60 are arranged to clamp disc 71 in the centered position with fasteners 64 projecting through respective through-holes 75. Outboard walls 62 of body members 61 are aligned with outboard radial wall 73 of hub 79, and inboard walls 65 of body members 61 are aligned with outer peripheral portion 18a of bearing end cap 18. Inboard walls 65 are disposed in interstice 40 between outer peripheral portion 18a and seal 32 but against axial locking ring 38. Fasteners 64 are then tightened to loosely clamp disc 71 to bearing end cap 18. Next, spacer rod 79 is inserted into threaded hole 78 until end 79b engages bearing end cap 18. Set screw 80 is then screwed into hole 78 until it presses on end 79a of spacer rod 79. Set screw 80 is then torqued so that disc 71 is moved relatively away from bearing end cap 18, whereby this movement assures that radial wall 73 will pressingly engage outboard wall 62, which will cause walls 65 to pressingly engage outer peripheral portion 18a. When set screw 80 has been sufficiently torqued, fasteners 64 are then torqued so that body members 61 are radially moved in a direction toward the center of disc 71 until body members 61 press on annular surface 72 of disc 71, and walls 65 pressingly engage axial locking ring 38. In the preferred embodiment, the contours of disc 71 and body members 61, including inboard and outboard walls 62 and 65, are sized and shaped so that retaining assembly 60 tightly clamps disc 71 in a centered position over the center of shaft end section 13 and bearing end cap 18.

Next, electrical power device 90 is installed on mounting assembly 50 by sliding rotor shaft 96 over hub shaft 76 until rotor shaft 96 engages radial stop 76a, and hook 17 is disposed between lugs 97. Pin 77 is then inserted through pin receiving hole 98 of rotor shaft 96, and through pin receiving hole 78b of hub shaft 76. Pin 77 is then deformed to securely lock hub shaft 76 to rotor shaft 96 to prevent relative movement therebetween. Pin 77 also provides a back-up to set screw 80 to thereby inhibit the loosening thereof due to shock or vibration. Cover plate 95 is then bolted to housing 94 with bolt 95a.

Operation of electrical power device assembly 100 will now be described with reference to the foregoing. As shaft end section 13 rotates during movement of the rail car, hub assembly 70 will likewise rotate by virtue of its clamped position over bearing end cap 18. Hub shaft 76 and rotor shaft 96 will rotate, thereby causing rotor 91 and magnets 91a to rotate. Housing 94, however, remains stationary as it is coupled to handling hook 17 by lugs 97. As magnets 91A rotate past stator poles 93a and windings 93b, the magnetic flux emitted by magnets 91a, as in the usual manner, is captured by windings 93b in the form of electrical alternating current pulses. Windings 93b are electrically connected to a power conversion circuit (not shown) for supplying power to rail car electrical system.

Thus, electrical power device assembly 100 is mountable to the axle of a vehicle and does not require removal of a bearing end cap during installation of the device and therefore does not disturb a bearing assembly of the axle during installation of the device. Although the electrical power device 90 according to the foregoing embodiment comprises an electrical inductance type generator, the mounting assembly 50 of the present invention, as will be apparent to those of skill in the electrical power device art, is suitable for use with other electrical power devices as well including inductance type generators, and inductance or reluctance type motors.

## Claims

1. A retaining device (50) for coupling an electrical assembly (90) to the end of an axle (13) of a vehicle, which end terminates in an outer peripheral portion (18a) forming a shoulder extending outwardly from the axle, characterized by a hub (70) for supporting the electrical assembly and including a hole (78) therethrough having a first axis, attaching means (61,64) for coupling said hub (70) to said axle with said first axis substantially in alignment with the axis of the axle (13) and for engaging said shoulder, a rod (79) disposed in said hole (78), and means (80,78) for urging the rod (79) towards the axle (13,18) so that said attaching means (61,64) tightly engages said shoulder thereby securing the hub (70) to the axle.

2. The device according to claim 1, wherein the means for urging said rod comprises a screw (80) in threaded engagement with a portion of the hole (78).

3. The device according to claim 1 or 2, wherein the hub (70) includes a first radial (73) surface perpendicular to said first axis, and wherein the attaching means includes upper and lower body members (61) each having first and second spaced apart and opposed walls (62,65), each of said first walls (62) being in engagement with said first radial surface (73) and each of said second walls (65) being engageable with said shoulder.

4. The device according to claim 1, 2 or 3, wherein the hub (70) includes a shaft (76) for supporting the electrical assembly extending centrally therefrom, said hole (78) extending axially through the shaft.

5. The device according to claim 4, in combination with an electrical assembly (90) having a stator (93) coupled to the vehicle for preventing rotation thereof and a rotor (91) attached to and rotated by the shaft (76).

6. The device according to claim 5, wherein the outer peripheral portion (18a) terminating the end of the axle comprises a separate bearing end cap (18) attached to the end of the axle, said shoulder being a surface of the bearing end cap, and wherein the rod (79) is urged tightly against the bearing end cap.
